# EUROPÄISCHE PATENTSCHRIFT

(11) **EP 2 533 633 B1**
(45) Veröffentlichungstag und Bekanntmachung des Hinweises auf die Patenterteilung: **01.02.2017**
(21) Anmeldenummer: 11703177.3
(22) Anmeldetag: 01.02.2011
(51) Int. Cl.: A01N 37/02, A01N 59/08, A01N 37/50, A01P 3/00

(54) **FUNGIZIDE MISCHUNGEN**
FUNGICIDAL MIXTURES
MÉLANGES FONGICIDES

(30) Priorität: 02.02.2010 EP 10001028
(43) Veröffentlichungstag der Anmeldung: 19.12.2012
(73) Patentinhaber: LANXESS Distribution GmbH, 51369 Leverkusen (DE)
(72) Erfinder: SAALFELD, Frank, 51515 Kürten-Dürscheid (DE); GAREIß, Johannes, 50829 Köln (DE)
(74) Vertreter: Deblon, Jörg-Stephan
(86) Internationale Anmeldenummer: PCT/EP2011/051416
(87) Internationale Veröffentlichungsnummer: WO 2011/095492

(56) Entgegenhaltungen:
- EP-A1- 2 153 720
- WO-A1-03/020027
- WO-A1-2005/099982
- WO-A1-2009/000407
- WO-A2-03/073852
- WO-A2-03/088745
- WO-A2-2005/044002
- WO-A2-2007/028537
- WO-A2-2009/101122
- WO-A2-2010/096358
- CN-A- 101 836 635
- DE-A1-102005 058 838
- DE-A1-102005 060 281
- JP-A- 60 028 907
- EGAWA HITOSHI: "Wood preservative compositions containing strobilurins and preservation method", CAPLUS, 12. März 2003 (2003-03-12), XP002265078,
- HASANAIN ET AL: "New one-step synthesis of polyimides in salicylic acid", POLYMER, ELSEVIER SCIENCE PUBLISHERS B.V, GB, Bd. 49, Nr. 4, 6. Januar 2008 (2008-01-06) , Seiten 831-835, XP022461151, ISSN: 0032-3861

## Beschreibung

Die Erfindung betrifft ein Verfahren zur Bekämpfung von Pilzen und Sporen, wie insbesondere von Pilzen der Familie *Venturiaceae* und ihren Konidien, sowie dafür geeignete Mittel und ihre Anwendung.

Durch pathogene Pilze ausgelöste Erkrankungen von Kulturpflanzen stellen durch ihre Auswirkungen, die von Qualitätsminderung der pflanzlichen Produkte, Belastung derselben mit Toxinen bis hin zum totalen Ernteausfall reichen, seit Anbeginn der Landwirtschaft ein gravierendes Problem dar. Bis vor wenigen Jahrzehnten wurde die Bekämpfung von Pilzen fast ausschließlich mit unselektiven, anorganischen Kontaktfungiziden, wie zum Beispiel Bordeauxbrühe und Netzschwefel vorgenommen. Mittlerweile sind auch gut wirksame, organische Kontaktfungizide weit verbreitet. Nachteilig an allen Kontaktfungiziden ist die Tatsache, dass Pilze nur in den ersten Phasen der Interaktion mit der Pflanze bekämpft werden können. In diesen Phasen heften sich zunächst die Sporen des Pilzes an die Pflanzenoberfläche an, keimen aus und der Pilz dringt schließlich in die Pflanze ein. Ist der Pilz erst einmal in das Pflanzengewebe eingedrungen, ist eine Bekämpfung mit Kontaktfungiziden nicht mehr möglich. Ein weiterer Nachteil ist, dass Kontaktfungizide üblicherweise z.B. durch Niederschlag schnell von der Pflanze abgewaschen werden, was häufige Wiederholungen der Anwendung erforderlich macht. Die Abwaschbarkeit in Verbindung mit einer häufigen Anwendung verursacht jedoch eine vergleichsweise hohe Umwelttoxizität der Kontaktfungizide.

Um diese Nachteile zu überwinden, wurden in den letzten Jahrzehnten organische, spezifisch wirkende Fungizide entwickelt. Dabei ist zwischen systemischen, lokalsystemischen und translaminar durchfeuchtenden Fungiziden zu unterscheiden. Allen diesen Fungizidtypen ist dabei gemeinsam, dass sie zumindest in die Pflanzenoberfläche eindringen und von dort mehr oder weniger in der Pflanze verteilt werden (siehe auch Definition weiter unten). Das hat zur Folge, dass eine Auswaschung nicht oder nur in untergeordnetem Maße stattfindet und Pilze auch nach Eindringen in das Pflanzengewebe bekämpft werden können.

Nachteilig an diesen Fungiziden ist allerdings, dass sich bei mehrmaliger Anwendung unter dem Selektionsdruck des jeweiligen Fungizides einzelne Pilzpopulationen schnell durchsetzen können und folglich weitere Behandlungen mit dem gleichen Fungizid am gleichen Ort aufgrund der Resistenzbildung wirkungslos sind. Aus diesem Grund besteht die Notwendigkeit einer komplizierten Spritzfolge im Jahresverlauf unter Verwendung wechselnder Fungizide, was aufwändig und kostenintensiv ist.

Die vorgenannten Nachteile von Kontaktfungiziden, d.h. die typischerweise hohe Abwaschbarkeit verbunden mit nur kurzzeitiger Wirkung und erhöhter Umwelttoxizität, sowie die Nachteile spezifisch wirkender Fungizide, die bei Mehrfachanwendung Resistenzen erzeugen können, machen es wünschenswert, neue fungizide Mittel bereitzustellen, die die vorgenannten Nachteile überwinden.

Aus WO 2009/101122 A2 ist bekannt Calciumformiat in Mitteln zur Bekämpfung des Feuerbrandes, einem Schadbakterium insbsondere an Obstgehölzen einzusetzen.

Ferner ist aus WO 03/020027 A1 bekannt ,Calciumformiat als Formulierungsbestandteil in verschiedensten Pflanzenschutzmittel einzusetzen, um die Verträglichkeit und Regenfestigkeit der Formulierungen zu erhöhen.

Aus WO 03/088745 A2 ist schließlich bekannt Salze der Ameisensäure in Mitteln zur Kontrolle des Wachstum von Pilzsporen in wässrigen Systemen wie Schwimmbädern und Kühlmittelleitungen oder auf Oberflächen einzudämmen.

Keines der vorgenannten Dokumente beschreibt jedoch den Einsatz von Calciumformiat zur Verbesserung der fungiziden Wirkung von organischen Fungiziden, insbesondere nicht die Überwindung entstandener Resistenzen.

Gegenstand der Erfindung sind nun fungizide Mittel enthaltend
- Trifloxystrobin (IUPAC. Methyl-(*E*)-methoxyimino-{(*E*)*-*α*-*[1*-*(α,α,α-trifluoro-*m*-tolyl)-ethylidene-aminooxy]-*o*-tolyl}acetat; CAS Nr. 141517-21-7)
- gegebenenfalls zumindest ein weiteres Fungizid
- Formiat
- zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist. Solche Substanzen werden nachstehend vereinfachend "saure Substanzen genannt".

Als weitere Fungizide eignen sich vorzugsweise solche Fungizide, die ausgewählt sind aus der Gruppe der systemischen, lokalsystemischen oder translaminar durchfeuchtenden, organischen Fungizide oder den nicht-systemischen Fungiziden.

Der Begriff nicht-systemisches Fungizid steht im Rahmen der Erfindung für eine Substanz mit fungizider Wirkung, die nicht oder nur unwesentlich in die Pflanze aufgenommen wird, sondern ihre fungizide Wirkung an der Oberfläche durch Kontakt mit dem Pilz oder seinen Sporen entfaltet. In der Literatur werden daher solche nicht-systemischen Fungizide häufig auch als Kontaktfungizide bezeichnet.

Der Begriff systemisches Fungizid steht im Rahmen der Erfindung für eine Verbindung mit fungizider Wirkung, die nach Aufnahme in die Pflanze, die typischerweise über Blätter oder Wurzeln erfolgt, über das Transportsystem in der Pflanze verlagert wird. In der Regel weisen systemische, organische Fungizide eine gute Wasserlöslichkeit auf.

Der Begriff lokalsystemisches Fungizid steht im Rahmen der Erfindung für eine Verbindung mit fungizider Wirkung, die in die Pflanze aufgenommen wird, aber über das Transportsystem in der Pflanze nicht oder nur in geringem Maße verlagert wird.

Der Begriff translaminar durchfeuchtendes Fungizid steht im Rahmen der Erfindung für eine Verbindung mit fungizider Wirkung, das in die Wachsschicht von Blättern aufgenommen wird, dort ein Depot bildet, und von dort langsam in die Pflanze eindringen kann-Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

Geeignete weitere Fungizide sind beispielsweise:
- Aldimorph, Ampropylfos, Ampropylfos-Kalium, Andoprim, Anilazin, Azaconazol, Azoxystrobin,
- Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,
- Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropicrin, Chlorothalonil, Chlozolinat, Clozylacon, Cufraneb, Cymoxanil, Cyproconazol, Cyprodinil, Cyprofuram,
- Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,
- Ediphenphos, Epoxiconazol, Etaconazol, Ethirimol, Etridiazol,
- Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Alminium, Fosetyl-Natrium, Fthalid, Fuberidazol, Furalaxyl, Furametpyr, Furcarbonil, Furconazol, Furconazol-cis, Furmecyclox,
- Guazatin,
- Hexachlorobenzol, Hexaconazol, Hymexazol,
- Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione,
- Kasugamycin, Kresoxim-methyl, Kupfer-Zubereitungen, wie: Kupferhydroxid, Kupfernaphthenat, Kupferoctanoat, Kupferoxychlorid, Kupfersulfat, Kupferoxid, Oxin-Kupfer und Bordeaux-Mischung,
- Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,
- Nickel-dimethyldithiocarbamat, Nitrothal-isopropyl, Nuarimol,
- Ofurace, Oxadixyl, Oxamocarb, Oxolinicacid, Oxycarboxim, Oxyfenthiin,
- Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,
- Quinconazol, Quintozen (PCNB),
- Schwefel und Schwefel-Zubereitungen,
- Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofos-methyl, Tolylfluanid, Triadimefon, Triadimenol, Triazbutil, Triazoxid, Trichlamid, Tricyclazol, Tridemorph, Triflumizol, Triforin, Triticonazol,
- Uniconazol,
- Validamycin A, Vinclozolin, Viniconazol,
- Zarilamid, Zineb, Ziram sowie
- Dagger G,
- OK-8705,
- OK-8801,
- α-(1,1 -Dimethylethyl)-β-(2-phenoxyethyl)-1H-1,2,4-triazol-1-ethanol,
- α-(2,4-Dichlorphenyl)-β-fluor-b-propyl-1H-1,2,4-triazol-1-ethanol,
- α-(2,4-Dichlorphenyl)-β-methoxy-a-methyl-1H-1,2,4-triazol-1-ethanol,
- α-(5-Methyl-1,3-dioxan-5-yl)-β-[[4-(trifluormethyl)-phenyl]-methylen]-1H-1,2,4-triazol-1-ethanol,
- (5RS,6RS)-6-Hydroxy-2,2,7,7-tetramethyl-5-(1H-1,2,4-triazol-1-yl)-3-octanon,
- (E)-α-(Methoxyimino)-N-methyl-2-phenoxy-phenylacetamid,
- {2-Methyl-1-[[[1-(4-methylphenyl)-ethyl]-amino]-carbonyl]-propyl}-carbaminsäure-1-isopropylester
- 1-(2,4-Dichlorphenyl)-2-(1H-1,2,4-triazol-1-yl)-ethanon-O-(phenylmethyl)-oxim,
- 1-(2-Methyl-1-naphthalenyl)-1H-pyrrol-2,5-dion,
- 1-(3,5-Dichlorphenyl)3-(2-propenyl)-2,5-pyrrolidindion,
- 1-[(Diiodmethyl)-sulfonyl]-4-methyl-benzol,
- 1-[[2-(2,4-Dichlorphenyl)-1,3-dioxolan-2-yl]-methyl]-1H-imidazol,
- 1-[[2-(4-Chlorphenyl)-3-phenyloxiranyl]-methyl]-1H-1,2,4-triazol,
- 1-[1-[2-[(2,4-Dichlorphenyl)-methoxy]-phenyl]-ethenyl]-1H-imidazol,
- 1-Methyl-5-nonyl-2-(phenylmethyl)-3-pyrrolidinol,
- 2',6'-Dibrom-2-methyl-4'-trifluormethoxy-4'-trifluor-methyl-1,3-thiazol-5-carboxanilid,
- 2,2-Dichlor-N-[1-(4-chlorphenyl)-ethyl]-1-ethyl-3-methyl-cyclopropancarboxamid,
- 2,6-Dichlor-5-(methylthio)-4-pyrimidinyl-thiocyanat,
- 2,6-Dichlor-N-(4-trifluormethylbenzyl)-benzamid,
- 2,6-Dichlor-N-[[4-(trifluormethyl)-phenyl]-methyl]-benzamid,
- 2-(2,3,3-Triiod-2-propenyl)-2H-tetrazol,
- 2-[(1-Methylethyl)-sulfonyl]-5-(trichlormethyl)-1,3,4-thiadiazol,
- 2-[[6-Deoxy-4-O-(4-O-methyl-β-D-glycopyranosyl)-a-D-glucopyranosyl]-amino]-4-methoxy-1H-pyrrolo [2,3-d]pyrimidin-5-carbonitril,
- 2-Aminobutan,
- 2-Brom-2-(brommethyl)-pentandinitril,
- 2-Chlor-N-(2,3-dihydro-1,1,3-trimethyl-1H-inden-4-yl)-3-pyridincarboxamid,
- 2-Chlor-N-(2,6-dimethylphenyl)-N-(isothiocyanatomethyl)-acetamid,
- 2-Phenylphenol(OPP),
- 3,4-Dichlor-1-[4-(difluoromethoxy)-phenyl]-1H-pyrrol-2,5-dion,
- 3,5-Dichlor-N-[cyan[(1-methyl-2-propynyl)-oxy]-methyl]-benzamid,
- 3-(1,1-Dimethylpropyl-1-oxo)-1H-inden-2-carbonitril,
- 3-[2-(4-Chlorphenyl)-5-ethoxy-3-isoxazolidinyl]-pyridin,
- 4-Chlor-2-cyan N,N-dimethyl-5-(4-methylphenyl)-1H-imidazol-1-sulfonamid,
- 4-Methyl-tetrazolo[1,5-a]quinazolin-5(4H)-on,
- 8-(1,1-Dimethylethyl)-N-ethyl-N-propyl-1,4-dioxaspiro[4.5]decan-2-methanamin,
- 8-Hydroxychinolinsulfat,
- 9H-Xanthen-9-carbonsäure-2-[(phenylamino)-carbonyl]-hydrazid,
- bis-(1-Methylethyl)-3-methyl-4-[(3-methylbenzoyl)-oxy]-2,5-thiophendicarboxylat
- cis-1-(4-Chlorphenyl)-2-(1H-1,2,4-triazol-1-yl)-cycloheptanol,
- cis-4-[3-[4-(1,1-Dimethylpropyl)-phenyl-2-methylpropyl]-2,6-dimethyl-morpholin-hydrochlorid,
- Ethyl-[(4-chlorphenyl)-azo]-cyanoacetat,
- Methantetrathiol-Natriumsalz,
- Methyl-1-(2,3-dihydro-2,2-dimethyl-1H-inden-1-yl)-1H-imidazol-5-carboxylat,
- Methyl-N-(2,6-dimethylphenyl)-N-(5-isoxazolylcarbonyl)-DL-alaninat,
- Methyl-N-(chloracetyl)-N-(2,6-dimethylphenyl)-DL-alaninat,
- N-(2,3-Dichlor-4-hydroxyphenyl)-1-methyl-cyclohexancarboxamid.
- N-(2,6-Dimethylphenyl)-2-methoxy-N-(tetrahydro-2-oxo-3-furanyl)-acetamid,
- N-(2,6-Dimethylphenyl)-2-methoxy N-(tetrahydro-2-oxo-3-thienyl)-acetamid,
- N-(2-Chlor-4-nitrophenyl)-4-methyl-3-nitro-benzolsulfonamid,
- N-(4-Cyclohexylphenyl)-1,4,5,6-tetrahydro-2-pyrimidinamin,
- N-(4-Hexylphenyl)-1,4,5,6-tetrahydro-2-pyrimidinamin,
- N-(5-Chlor-2-methylphenyl)-2-methoxy-N-(2-oxo-3-oxazolidinyl)-acetamid,
- N-(6-Methoxy)-3-pyridinyl)-cyclopropancarboxamid,
- N-[2,2,2-Trichlor-1-[(chloracetyl)-amino]-ethyl]-benzamid,
- N-[3-Chlor-4,5-bis-(2-propinyloxy)-phenyl]-N'-methoxy-methanimidamid,
- N-Formyl-N-hydroxy-DL-alanin Natriumsalz,
- O,O-Diethyl-[2-(dipropylamino)-2-oxoethyl]-ethylphosphoramidothioat,
- O-Methyl-S-phenyl-phenylpropylphosphoramidothioate,
- S-Methyl-1,2,3-benzothiadiazol-7-carbothioat und
- spiro[2H]-1-Benzopyran-2,1'(3'H)-isobenzofuran]-3'-on.

Die erfindungsgemäßen Mittel enthalten vorzugsweise entweder kein weiteres Fungizid oder ein oder zwei weitere Fungizide, die in einer bevorzugten Ausführungsform aus den vorgenannten ausgewählt sind. Besonders bevorzugt enthalten die erfindungsgemäßen Mittel kein weiteres Fungizid oder ein weiteres Fungizid, das in einer noch weiter bevorzugten Ausführungsform aus den vorgenannten ausgewählt sind.

In einer besonders bevorzugten Ausführungsform der Erfindung enthalten die erfindungsgemäßen Mittel entweder kein weiteres Fungizid oder ein weiteres Fungizid, das ausgewählt ist aus der Gruppe Captan, Tebuconazol, Propiconazol, Cyproconazol, Cymoxanil und Pyrimethanil, bevorzugt aus der Gruppe Captan, Cycproconazol und Propiconazol.

Die erfindungsgemäßen Mittel können einen Anteil an Trifloxystrobin beispielsweise von 0,001 bis 90 Gew.-%, vorzugsweise 0,1 bis 75 Gew.-%, besonders bevorzugt 0,5 bis 30 Gew.-% enthalten.

Der Begriff Formiat umfasst im Rahmen der Erfindung sowohl anorganische als auch organische Formiate sowie Ameisensäure selbst.

In einer bevorzugten Ausführungsform enthält das erfindungsgemäße Mittel Formiat in Form von Kalium-, Natrium- oder Calciumformiat oder Ameisensäure. Davon sind auch Kalium- und Natriumdiformat, Doppelsalze aus Kalium- oder Natriumformiat mit Ameisensäure umfasst.

In einer besonders bevorzugten Ausführungsform enthält das erfindungsgemäße Mittel Calciumformiat.

In einer weiteren, bevorzugten Ausführungsform beträgt das molare Verhältnis von Formiat zu Trifloxystrobin von 0,1:1 bis 5000:1, bevorzugt von größer als 1:1 bis 1000:1, besonders bevorzugt von 5:1 bis 500:1 und ganz besonders bevorzugt von 10:1 bis 250:1.

Die erfindungsgemäßen Mittel enthalten weiterhin saure Substanzen, d.h. Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen. Saure Substanzen umfassen zum Beispiel solche Substanzen, die
- aufgrund guter Wasserlöslichkeit als einmolare Lösung in Wasser vermessen werden können und einen pH-Wert von 5,0 oder weniger bei Standardbedingungen aufweisen
- aufgrund einer Wasserlöslichkeit, die weniger als ein Mol/1 bei Standardbedingungen beträgt als verdünnte wässrige Lösungen vermessen werden müssen aber berechnet auf eine einmolare Lösung in Wasser einen pH-Wert von 5,0 oder weniger bei Standardbedingungen aufweisen würden
- aufgrund geringer Wasserlöslichkeit oder Wasserunlöslichkeit in einem anderen Lösungsmittel als Wasser vermessen werden müssen aber berechnet auf eine wässrige Vergleichsskala einen pH-Wert von 5,0 oder weniger bei Standardbedingungen aufweisen würden

Entsprechende Berechnungen und Tabellen sind nicht nur dem Fachmann hinlänglich bekannt.

Einige Fungizide sind saure Substanzen in Sinne der Erfindung. In diesem Fall ist die Anwesenheit zumindest einer zusätzlichen sauren Substanz nicht erforderlich, aber bevorzugt.

Ameisensäure und Alkalimetalldiformate sind ebenfalls saure Substanzen im Sinne der Erfindung. In diesem Fall ist die Anwesenheit zumindest einer zusätzlichen sauren Substanz ebenfalls nicht erforderlich, aber bevorzugt.

Geeignete saure Substanzen sind Säuren und saure Salze. Besonders geeignet sind organische Säuren mit einem pK_{A}-Wert von 2,0 bis 5,0.

Ebenfalls geeignet sind entsprechend sauer wirkende Ammoniumsalze wie beispielsweise Ammoniumchlorid und organische Ammoniumsalze oder Additionsverbindungen wie beispielsweise Alkalimetalldiformate,

Ist Calciumformiat Bestandteil von erfindungsgemäßen Mitteln, so sind Säuren und saure Salze bevorzugt, die mit Calciutn-Ionen keinen schwerlöslichen Niederschlag bilden.

Unter schwerlöslichen Calciumsalzen werden im Rahmen der Erfindung solche verstanden, die in Gegenwart der entsprechenden freien Säure und bei pH-Werten von 3,0 bis 6,5 bei Standardbedingungen eine Löslichkeit von weniger als 1g/l aufweisen. Geeignete organische Säuren sind beispielsweise Ameisensäure, Essigsäure, Propionsäure, Milchsäure, Weinsäure, Äpfelsäure, Bernsteinsäure und Zitronensäure, besonders bevorzugt ist Zitronensäure.

In einer weiteren bevorzugten Ausführungsform wird das Verhältnis von Fungiziden, Formiaten und sauren Substanzen so gewählt, dass eine Lösung, Suspension, Aufschlämmung oder Emulsion von einem Gew.-% der erfindungsgemäßen Mittel in Wasser einen pH-Wert von 4,0 bis 6,5, bevorzugt 4,0 bis 5,0 und besonders bevorzugt 4,0 bis 4,8 bei Standardbedingungen aufweist.

Die erfindungsgemäßen Mittel können weiterhin verschiedene Zusatzstoffe enthalten. Für die nachstehend genannten Zusatzstoffe besteht jeweils unabhängig voneinander auch die Möglichkeit, dass sie nicht enthalten sind. Mögliche Zusatzstoffe sind beispielsweise:
- Hygroskopische Substanzen und/oder Feuchthaltemittel zur Regulierung der Feuchtigkeit: Hygroskopische Substanzen sind beispielsweise hygroskopische anorganische Salze wie zum Beispiel Calciumchlorid oder Calciumnitrat; geeignete Feuchthaltemittel sind beispielsweise organische Substanzen wie beispielsweise Glycerin, Polydextrose, Sorbit, Xylit, Propylenglykole, Polyethylenglycole oder Gemische dieser Polyole.

Die erfindungsgemäßen Mittel können dabei beispielsweise 0,01 bis 40, vorzugsweise 0,2 bis 20 und besonders bevorzugt 0,5 bis 2 Gew.-% an hygroskopischen Substanzen und/oder Feuchthaltemitteln enthalten.
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die erfindungsgemäßen Mittel können dabei beispielsweise 0,01 bis 10, vorzugsweise 0,2 bis 8, besonders bevorzugt 0,3 bis 5 und ganz besonders bevorzugt 0,5 bis 3 Gew.-% an grenzflächenaktiven Stoffen enthalten.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen Mittel können dabei beispielsweise 0,01 bis 8, vorzugsweise 0,2 bis 6, besonders bevorzugt 0,3 bis 5 und ganz besonders bevorzugt 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C ₁₂-C₂₀, Natriumhydroxyoctadecansulfonat, Natrium-, Kalium-und Ammoniumsalze von Hydroxyfettsäuren der Kettenlänge C₁₂-C₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C ₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen Mittel können dabei beispielsweise 0,01 bis 15, vorzugsweise 0,2 bis 8, besonders bevorzugt 0,5 bis 6 und ganz besonders bevorzugt 1 bis 5 Gew.-% an Emulgatoren enthalten.
- Dispergiermittel, wie beispielsweise Alkylphenolpolyglycolether. Die erfindungsgemäßen Mittel können dabei beispielsweise 0,01 bis 8, vorzugsweise 0,1 bis 6, besonders bevorzugt 0,2 bis 5 und ganz besonders bevorzugt 0,4 bis 3 Gew.-% an Dispergiermitteln enthalten.
- Stabilisatoren, wie z.B. Cellulose und Cellulosederivate. Die erfindungsgemäßen Mittel können dabei beispielsweise 0,01 bis 6, vorzugsweise 00,1 bis 3, besonders bevorzugt 0,01 bis 2 und ganz besonders bevorzugt 0,01 bis 1 Gew.-% an Stabilisatoren enthalten.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle. Die erfindungsgemäßen Mittel können dabei beispielsweise 0,01 bis 8, vorzugsweise 0,1 bis 4, besonders bevorzugt 0,2 bis 3 und ganz besonders bevorzugt 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen Mittel können dabei beispielsweise 0,01 bis 20, vorzugsweise 0,1 bis 10, besonders bevorzugt 0,1 bis 5 und ganz besonders bevorzugt 0,1 bis 2 Gew.-% an Spreitmitteln enthalten.
- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon. Die erfindungsgemäßen Mittel können dabei beispielsweise 0,01 bis 25, vorzugsweise 0,2 bis 12, besonders bevorzugt 0,5 bis 7 und ganz besonders bevorzugt 1 bis 4 Gew.-% an organischen Lösungsmittel enthalten.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen Mittel können dabei beispielsweise jeweils 0,001 bis 4, vorzugsweise 0,01 bis 1, besonders bevorzugt 0,01 bis 0,8 Gew.-% an Duftstoffen und Farbstoffen enthalten.
- Entstaubungsmittel, wie beispielsweise Polyglykole und Polyglykolether. Die erfindungsgemäßen Mittel können dabei beispielsweise jeweils 0,01 bis 2, vorzugsweise 0,05 bis 1, besonders bevorzugt 0,1 bis 0,5 Gew.-% an Entstaubungsmitteln enthalten.
- Puffersubstanzen, Puffersysteme oder pH-Wert-Regulatoren. Die erfindungsgemäßen Mittel können dabei beispielsweise jeweils 0,01 bis 10, vorzugsweise 0,1 bis 5, Gew.-% an Puffersubstanzen, Puffersystemen oder pH-Wert-Regulatoren enthalten.

Vorzugsweise beträgt der Gehalt der vorgenannten Zusatzstoffe in den erfindungsgemäßen Mitteln in Summe 0,01 bis 100, vorzugsweise 0,5 bis 10 und besonders bevorzugt 1 bis 5 Gew.-% bezogen auf die Summe von Trifloxystrobin, gegebenenfalls weiteren Fungiziden, Formiaten und sauren Substanzen.

Weiterhin können die erfindungsgemäßen fungiziden Mittel weiterhin jeweils unabhängig voneinander Bakterizide, Insektizide, Akarizide und Wachstumsregulatoren enthalten oder jeweils nicht. Vorzugsweise enthalten die erfindungsgemäßen fungiziden Mittel keine zusätzlichen Bakterizide, Insektizide oder Akarizide als weitere Bestandteile.

Von der Erfindung sind die erfindungsgemäßen Mittel in beliebiger Formulierung enthalten. Bevorzugte Formulierungen sind Kapselsuspensionen (CS), Wasserlösliche Konzentrate (SL), Suspensionskonzentrate (SC), Spritzpulver (WP), Wasserdispergierbare Granulate (WG), wobei Wasserlösliche Konzentrate (SL), Suspensionskonzentrate (SC) und Wasserdispergierbare Granulate (WG) generell bevorzugt sind. Grundsätzlich sind bevorzugte Formulierungsarten im Wesentlichen abhängig von den eingesetzten Fungizidkomponenten und ihren physikalischen Eigenschaften. Da diese jedoch bekannt sind, ist es für den Fachmann gängige Praxis, in wenigen Versuchen eine bevorzugte Formulierungsart zu ermitteln.

Erfindungsgemäße Formulierungen können in an sich bekannter Weise hergestellt werden.

Besonders bevorzugte Mittel enthalten Trifloxystrobin, Formiat bezogen auf freie Ameisensäure und zumindest eine zusätzliche saure Substanz in Gewichtsverhältnissen von 1:(0,5 bis 500):(0,5 bis 500), bevorzugt 1:(10 bis 100):(5 bis 100) und besonders bevorzugt 1:(10 bis 50):(10 bis 50), wobei solche Mittel noch weiter bevorzugt sind, in denen das Gewichtsverhältnis von Formiat bezogen auf freie Ameisensäure und zumindest einer zusätzlicher sauren Substanz 0,1:1 bis 10:1, besonders bevorzugt 1:1 bis 8:1 beträgt. In einer noch weiter bevorzugten Form wird Formiat in die erfindungsgemäßen Mittel Formiat zumindest teilweise, bevorzugt ausschließlich als Calciumformiat eingebracht.

Ganz besonders bevorzugte Mittel enthalten Trifloxystrobin, Calciumformiat bezogen auf freie Ameisensäure und zumindest eine organische, bei Standardbedingungen feste Säure mit einem pK_{A} Wert von 2,0 bis 5,0 in Gewichtsverhältnissen von 1:(0,5 bis 500):(0,5 bis 500), bevorzugt 1:(10 bis 100):(5 bis 100) und besonders bevorzugt 1:(10 bis 50):(10 bis 50), wobei solche Mittel noch weiter bevorzugt sind, in denen das Gewichtsverhältnis von Formiat bezogen auf freie Ameisensäure und zumindest einer zusätzlicher sauren Substanz 0,1:1 bis 10:1, besonders bevorzugt 1:1 bis 8:1 beträgt. Ganz besonders bevorzugt sind dabei Mittel, in denen eine organische, bei Standardbedingungen feste Säure Zitronensäure ist.

Ein ganz bevorzugtes Mittel enthält Trifloxystrobin, Calciumformiat und Zitronensäure. Solche Mittel sind beispielsweise erhältlich durch Mischung des Produktes Flint® der Bayer Crop Science AG (enthält 500 g/kg Trifloxystrobin) mit dem Produkt Folanx ® der Lanxess Distribution GmbH (enthält 70 bis 80 Gew.-% Calciumformiat, 14 bis 18 Gew.-% Calciumchlorid und 1 bis 15 Gew.-% Zitronensäure).

Von der Erfindung sind weiterhin wässrige, fungizide Mittel umfasst, die durch Verdünnung der erfindungsgemäßen Mittel mit Wasser erhältlich sind.

Die erfindungsgemäßen Mittel besitzen sehr gute fungizide und sporozide Eigenschaften und eignen sich daher insbesondere zur Bekämpfung von phytopathogenen Pilzen einschließlich ihrer Sporen.

Daher ist von der Erfindung auch ein Verfahren zur Bekämpfung von phytopathogenen Pilzen umfasst, das dadurch gekennzeichnet ist, dass die Bekämpfung unter Einsatz der erfindungsgemäßen Mittel erfolgt.

Phytopathogene Pilze sind beispielsweise Plasmodiophoromyceten, Oomyceten, Chytridiomyceten, Zygomyceten, Ascomyceten, Basidiomyceten und Deuteromyceten.

Phytopathogene Pilze, die durch die erfindungsgemäßen Mittel bekämpfbar sind, sind beispielsweise:
*Alternaria-Arten, Podosphaera-Arten, Sclerotinia-*Arten, *Physalospora canker* insbesondere an Gemüse und Obst, *Botrytis cinerea* (Grauschimmel) insbesondere an Erdbeeren, Gemüse, Zierpflanzen und Reben, *Coxynespora melonis* insbesondere an Gurken, Erdbeeren; *Colletotrichum*-Arten insbesondere an Gurken; *Diplocarpon rosae* insbesondere an Rosen; *Elsinoe fawcetti* und *Diaporthe* citri insbesondere an Citrus-Früchten; *Sphaerotheca*-Arten insbesondere an Gurken, Kürbisgewächsen, Erdbeeren und Rosen; *Cercospora-*Arten insbesondere an Erdnüssen, Zuckerrüben, Eierpflanzen und Dattelpflaumen; *Erysiphe cichoracearum* und *Sphaerotheca fuliginea* insbesondere an Kürbisgewächsen, *Leveiillina taurica* insbesondere an Piment; *Mycosphaerella*-Arten insbesondere an Äpfeln und Japanischer Aprikose; *Phyllactinia kakicola, Gloesporium-Arten* insbesondere an Äpfeln, *Gloesporium kaki,* insbesondere an Japanischer Aprikose; *Gymnosporangium yamadae, Leptotthrydium pomi, Podosphaera leucotricha* und *Gloedes pomigena* insbesondere an Äpfeln; *Cladosporium carpo*philum insbesondere an Birnen und Japanischer Aprikose; *Phomopsis*-Arten insbesondere an Birnen; *Phytopora*-Arten insbesondere an Citrus-Früchten, Kartoffeln, Zwiebeln; *Phytophthora infestans* insbesondere an Kartoffeln und Tomaten, *Erysiphe graminis* (echter Mehltau) insbesondere an Getreide, Fusarium- und *Verticillium*-Arten an verschiedenen Pflanzen, *Glomerella cingulata* insbesondere an Tee; *Helminthosporium-Arten* insbesondere an Getreide, Mycosphaerella-Arten insbesondere an Bananen und Erdnüssen, *Plasmopara viticola* insbesondere an Reben und Grapefruits, Personospora-Arten insbesondere an Zwiebeln, Spinat und Chrysantemen; *Phaeoisariopsis vitis* und *Spaceloma ampelina* insbesondere an Grapefruits; *Pseudocercosporella herpotrichoides* insbesondere an Weizen und Gerste, *Pseudoperonospora-*Arten insbesondere an Hopfen und Gurken, *Puccinia-*Arten und *Typhula-*Arten insbesondere an Getreide, *Pyricularia oryzae* insbesondere an Reis, *Rhizoctonia-*Arten insbesondere an Baumwolle, Reis und Rasen, *Septoria nodorum* insbesondere an Weizen, *Uncinula necator* insbesondere an Reben, *Ustilago-*Arten insbesondere an Getreide und Zuckerrohr, sowie *Venturia-*Arten (Schorf) insbesondere an Äpfeln und Birnen.

Es wurde festgestellt, dass die Wirkung der erfindungsgemäßen Mittel im Vergleich zur bloßen Wirkung der in ihr enthaltenen Fungizide deutlich überlegen ist. Dies ist nach eigenen Erkenntnissen darauf zurückzuführen, dass die Wirkung des Trifloxystrobins bzw. der gegebnenfalls vorhandenen weiteren Fungizide als Komponente in der Zusammensetzung der erfindungsgemäßen Mittel so gesteigert wird, dass die Aufwandmenge bei gleicher Wirkung im Vergleich zum Einsatz des Trifloxystrobins in nicht erfindungsgemäßen Mitteln erheblich gesteigert wird oder sogar Resistenzen gegen Trifloxystrobin in nicht erfindungsgemäßen Mitteln durch Ausbringung in Form der erfindungsgemäßen Mittel überwunden werden können. In vielen Fällen werden sogar beide Mechanismen beobachtet.

Die erfindungsgemäßen Mittel bringen daher den besonderen Vorteil mit sich, dass die Mengen an Trifloxystrobin und gegebenenfalls weiteren Fungiziden bei gleicher Wirkung erheblich verringert werden können und Endanwender bei bestehendem Resistenzrisiko insbesondere bei systemischen oder lokalsystemischen Fungiziden in einer Spritzfolge nicht das Fungizid wechseln müssen, sondern z.B. nach Behandlung mit Fungiziden in nicht erfindungsgemäßen Mitteln, das gleiche Fungizid in Form erfindungsgemäßer Mittel ausbringen können.

Mittel enthaltend Trifloxystrobin, Calciumformiat und Zitronensäure eignen sich besonders gut zur Bekämpfung von *Venturiaceae* und ihren Konidien, sowie insbesondere der Spezies *Venturia inaequalis* und ihren Konidien. Vorgenannte Mittel eignen sich daher besonders gut zur Verwendung im Obstbau.

Das Verfahren zur Bekämpfung von phytopathogenen Pilzen unter Einsatz der erfindungsgemäßen Mittel kann in an sich bekannter Weise beispielsweise direkt durch Behandlung von Pflanzen und Pflanzenteilen mit dem Mittel oder durch Einwirkung der Mittel auf deren Umgebung, Lebensraum oder Lagerraum erfolgen. Die Ausbringung der erfindungsgemäßen Mittel kann beispielsweise durch Tauchen, Sprühen, Verdampfen, Vernebeln, Streuen, Aufstreichen und bei Vermehrungsmaterial, wie insbesondere bei Samen, vorzugsweise durch ein- oder mehrschichtiges Umhüllen erfolgen. Bei Bäumen kann, vorzugsweise dann, wenn die erfindungsgemäßen Mittel systemische Fungizide enthalten, die Ausbringung auch durch Stammapplikation erfolgen.

Erfindungsgemäß können alle Pflanzen und Pflanzenteile mit den erfindungsgemäßen fungiziden Mitteln und daraus erhältlichen wässrigen Mitteln behandelt werden. Unter Pflanzen werden hierbei alle Pflanzen und Pflanzenpopulationen, wie insbesondere Kulturpflanzen und ihre Populationen verstanden. Unter Kulturpflanzen werden dabei beispielsweise Pflanzen einschließlich transgener Pflanzen und durch Sortenschutzrechte schützbare oder nicht schützbare Pflanzensorten verstanden, die durch konventionelle Züchtungs- und Optimierungsmethoden oder durch biotechnologische und gentechnologische Methoden oder Kombinationen dieser Methoden erhalten werden können. Der Begriff Pflanzenteile umfasst im Rahmen der Erfindung alle oberirdischen und unterirdischen Teile und Organe der Pflanzen, wie z.B. wie z.B. Blätter, Blüten, Fruchtkörper, Früchte, Knollen, Nadeln, Rhizome, Samen, Sprosse, Stängel, Stämme und Wurzeln sowie Erntegut, vegetatives und generatives Vermehrungsmaterial, wie beispielsweise Stecklinge, Knollen, Rhizome, Ableger und Samen.

Die erfindungsgemäßen Mittel werden beispielsweise und bevorzugt in Aufwandmengen von 0,1 bis 1,5 1, vorzugsweise 0,375 bis 0,5 1/ha/mKH (mKH = Meter Kronenhöhe) ausgebracht, wobei sich die Angaben auf wässrige Mittel mit einem Anteil von 0,1 bis 2 Gew.-% an erfindungsgemäßen fungiziden Mitteln bezieht.

Es wurde weiterhin festgestellt, dass eine positive Wirkung der Formiate und der sauren Substanzen auch dann erreicht wird, wenn die Anwendung nicht gleichzeitig durch die Anwendung in Form eines erfindungsgemäßen Mittels erfolgt, was besonders bevorzugt ist, sondern zumindest teilweise auch dann, wenn die Behandlung von Pflanzen und Pflanzenteilen mit den Komponenten der erfindungsgemäßen Mittel innerhalb von 72 Stunden, vorzugsweise innerhalb von 36 Stunden erfolgt, bzw. die Einwirkung der Komponenten der erfindungsgemäßen Mittel auf die Umgebung, den Lebensraum oder Lagerraum von Pflanzen und Pflanzenteilen innerhalb von 120 Stunden, vorzugsweise innerhalb von 36 Stunden erfolgt.

Gegenstand der Erfindung ist daher auch ein Verfahren zur Bekämpfung von phytopathogenen Pilzen, das dadurch gekennzeichnet ist, dass Pflanzen und Pflanzenteile innerhalb von 72 Stunden oder die Umgebung, der Lebensraum oder Lagerraum von Pflanzen und Pflanzenteilen innerhalb von 120 Stunden mit den Komponenten I) bis III)
I) Trifloxystrobin
II) Formiat
III) zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist
behandelt werden.

Im Übrigen gelten die vorgenannten Angaben zu Vorzugsbereichen, nicht oder gegebenenfalls vorhandenen Fungiziden und anderen Stoffen völlig analog.

Wenn die Behandlung mit den Komponenten I) bis III) nicht gleichzeitig z.B. durch die Anwendung eines erfindungsgemäßen Mittels erfolgt, ist es bevorzugt zunächst ein Mittel enthaltend Komponente I) und danach ein Mittel enthaltend die Komponenten II) und III) anzuwenden.

Ein Mittel enthaltend die Komponenten II) und III) ist vorzugsweise ein Mittel enthaltend Calciumformiat und eine organische Säure wie beispielsweise Zitronensäure. Ein ganz bevorzugtes Mittel enthaltend die Komponenten II) und III) ist das Produkt Folanx® der Lanxess Distribution GmbH mit oben genannter Zusammensetzung.

Die erfindungsgemäßen fungiziden Mittel und daraus erhältlichen wässrigen Mittel eignen sich weiterhin zum Schutz von technischen Materialien gegen Befall und Zerstörung durch unerwünschte Mikroorganismen.

Der Begriff technische Materialien umfasst im Rahmen der Erfindung nicht lebende Materialien zur Verwendung in der Technik, die vor mikrobieller Veränderung oder Zerstörung geschützt werden sollen. Dazu gehören, Klebstoffe, Leime, Papier und Karton, Textilien, Leder, Holz, Anstrichmittel und Kunststoffartikel, Kühlschmierstoffe, Wärmeübertragungsflüssigkeiten und andere Materialien, die von Mikroorganismen befallen oder zersetzt werden können. Dazu gehören beispielsweise auch Teile von Produktionsanlagen wie Kühlwasserkreisläufe.

Der Begriff unerwünschte Mikroorganismen umfasst beispielsweise Bakterien, Pilze, und Algen, vorzugsweise Pilze wie insbesondere Schimmelpilze, holzverfärbende und holzzerstörende Pilze (B asidiomyceten).

Besonders unerwünschte Mikroorganismen sind beispielsweise Mikroorganismen der folgenden Gattungen: *Alternaria,* wie beispielsweise *Alternaria tenuis, Aspergillus,* wie beispielsweise *Aspergillus niger, Chaetomium,* wie beispielsweise *Chaetomium globosum, Coniophora,* wie beispielsweise *Coniophora puetana, Lentinus,* wie beispielsweise *Lentinus tigrinus, Penicillium,* wie beispielsweise *Penicillium glaucum, Polyporws,* wie beispielsweise *Polyporus versicolor, Aureobasidium,* wie beispielsweise *Aureobasidium pullulans, Sclerophoma,* wie beispielsweise *Sclerophoma pityophila, Trichoderma,* wie beispielsweise *Trichoderma viride, Escherichia,* wie beispielsweise *Escherichia coli, Pseudomonas,* wie beispielsweise *Pseudomonas aeruginosa, Staphylococcus,* wie beispielsweise *Staphylococcus aureus.*

### Beispiele

Apfelsorten der Sorte Jonagold auf Unterlage M9 wurden im Gewächshaus angezogen. Jeweils die jüngsten drei voll entfalteten Blätter von wachsenden Trieben wurden behandelt und inokuliert die Inokulation erfolgte als Sprühinokulation mit Konidien von nicht mit Fungizid behandelten Bäumen in einer Konzentration von 10⁵ Konidien/ml. Zur Untersuchung der kurativen Wirkung der Produkte wurden die Blätter nach der Inokulation 20 Stunden in einer Nebelkammer inkubiert. 24 Stunden nach der künstlichen Inokulation erfolgte die Behandlung auf das abgetrocknete Blatt. Eine Variante blieb als Kontrolle ungehandelt.

Bis zur Auswertung der Versuche (15-21 Tage) wurden die Pflanzen im Gewächshaus inkubiert. Tabelle 1 gibt eine Übersicht über die verschiedenen Versuchsvarianten.

Die Bonitur der Schorfsymptome erfolgte, indem die mit sporulierenden Läsionen durch *Venturia inaequalis* bedeckte Fläche abgeschätzt wurde.

Die Versuche wurden mit fünf Trieben pro Variante durchgeführt und einmal wiederholt. Die Befallzahlen der jeweils 10 Apfeltriebe jeder Variante wurden gemittelt. Die Mittelwerte jeder Behandlung wurden mit einer Varianzanalyse und Tukey's Multiple Comparison Test verglichen.

Die prozentuale Reduktion der Schorfläsionen im Vergleich zur unbehandelten Kontrolle wurde als Wirkungsgrad errechnet.

Als Quelle für Trifloxystrobin wurde eine 50 Gew.-% Formulierung von Trifloxystrobin als wasserdispergierbares Granulat verwendet, die unter dem Handelsnamen Flint® von der Firma Bayer CropScience AG kommerziell verfügbar ist.

Als Quelle für Formiat und Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen wurde das Handelsprodukt Folanx® Ca29 der Lanxess Distribution GmbH, Langenfeld, Deutschland verwendet (Probe enthält 75 Gew.-% Calciumformiat, 10 Gew.-% Zitronensäure und 13 Gew.-% Calciumchlorid)

Die Ergebnisse sind in Tabelle 1 zusammengefasst:

**Tabelle 1: Wirkung eines fungiziden Mittels aus Folanx® Ca29 und Flint® 50 WG in verschiedenen Konzentrationen gegen Apfelschorf bei kurativer Applikation**

| Beispiel | Präparat/e | Konzentration [Gew.-%] | Befall [%] | Stabw. | Varianzanalyse, Tukey's Multiple Comparison | Wirkungsgrad [%] |
|---|---|---|---|---|---|---|
| 1 | ohne | | **39,2** | | a | |
| 2 | Flint® | 0,0011% | **10,7** | 19 | bc | **72,8** |
| 3 | Flint® | 0,01% | **4,3** | 7,4 | c | **89,0** |
| 4 | Folanx® Ca29 | 1% | **17,4** | 18,4 | b | **55,6** |
| 5 | Folanx® Ca29 + Flint® | 1% + 0,0011% | **7,3** | 11,9 | c | **81,4** |
| 6 | Folanx® Ca29 + Flint® | 1% + 0,01% | **1,9** | 6,9 | c | **95,2** |

Der durchschnittliche Schorfbefall in der unbehandelten Kontrolle lag bei 39%. Alle getesteten Präparate und Präparatkombinationen reduzierten die Schorfsymptome im Vergleich zur unbehandelten Kontrolle signifikant (Tab. 1).

Aus den Beispielen ist erkennbar, dass der Zusatz von Folanx® Ca29 zu Flint® die Wirksamkeit erhöht.

## Patentansprüche

1. Fungizides Mittel enthaltend
• Trifloxystrobin
• Formiat
• zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist.

2. Fungizides Mittel gemäß Anspruch 1, **dadurch gekennzeichnet, dass** es zumindest ein weiteres Fungizid enthält.

3. Fungizides Mittel gemäß Anspruch 2 , **dadurch gekennzeichnet, dass** es als weitere Fungizide eines oder mehrere der folgenden enthält:
• Aldimorph, Ampropylfos, Ampropylfos-Kalium, Andoprim, Anilazin, Azaconazol, Azoxystrobin,
• Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,
• Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropicrin, Chlorothalonil, Chlozolinat, Clozylacon, Cufraneb, Cymoxanil, Cyproconazol, Cyprodinil, Cyprofuram,
• Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,
• Ediphenphos, Epoxiconazol, Etaconazol, Ethirimol, Etridiazol,
• Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Alminium, Fosetyl-Natrium, Fthalid, Fuberidazol, Furalaxyl, Furametpyr, Furcarbonil, Furconazol, Furconazol-cis, Furmecyclox,
• Guazatin,
• Hexachlorobenzol, Hexaconazol, Hymexazol,
• Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione,
• Kasugamycin, Kresoxim-methyl, Kupfer-Zubereitungen, wie: Kupferhydroxid, Kirpfernaphthenat, Kupferoctanoat, Kupferoxychlorid, Kupfersulfat, Kupferoxid, Oxin-Kupfer und Bordeaux-Mischung,
• Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,
• Nickel-dimethyldithiocarbamat, Nitrothal-isopropyl, Nuarimol,
• Ofurace, Oxadixyl, Oxamocarb, Oxolinicacid, Oxycarboxim, Oxyfenthiin,
• Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,
• Quinconazol, Quintozen (PCNB),
• Schwefel und Schwefel-Zubereitungen,
• Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofosmethyl, Tolylfluanid, Triadimefon, Triadimenol, Triazbutil, Triazoxid, Trichlamid, Tricyclazol, Tridemorph, Triflumizol, Triforin, Triticonazol,
• Uniconazol,
• Validamycin A, Vinclozolin, Viniconazol,
• Zarilamid, Zineb, Ziram sowie
• Dagger G,
• OK-8705,
• OK-8801,
• α-(1,1-Dimethylethyl)-β-(2-phenoxyethyl)-1H-1,2,4-triazol-1-ethanol,
• α-(2,4-Dichlorphenyl)-β-fluor-b-propyl-1H-1,2,4-triazol-1-ethanol,
• α-(2,4-Dichlorphenyl)-β-methoxy-a-metltyl-1H-1,2,4-triazol-1-ethanol,
• α-(5-Methyl-1,3-dioxan-5-yl)-β-[[4-(trifluormethyl)-phenyl]-methylen]-1H-1,2,4-triazol-1-ethanol,
• (5RS,6RS)-6-Hydroxy-2,2,7,7-tetramethyl-5-(1H-1,2,4-triazol-1-yl)-3-octanon,
• (E)-a-(Methoxyimino)-N-methyl-2-phenoxy-phenylacetamid,
• {2-Methyl-1-[[[-(4-methylphenyl)-ethyl]-amino]-carbonyl]-propyl}-carbaminsäure-1-isopropylester
• 1-(2,4-Dichlorphenyl)-2-(1H-1,2,4-triazol-1-yl)-ethanon-O-(phenylmethyl)-oxim,
• 1-(2-Methyl-1-naphthalenyl)-1H-pyrrol-2,5-dion,
• 1-{3,5-Dichlorphenyl}3-(2-propenyl)-2,5-pyrrolidindion,
• 1-[(Diiodmethyl)-sulfonyl]-4-methyl-benzol,
• 1-[[2-(2,4-Dichlorphenyl)-1,3-dioxolan-2-yl]-methyl]-1H-imidazol,
• 1-[[2-(4-Chlorphenyl)-3-phenyloxiranyl]-methyl]-1H-1,2,4-triazol,
• 1-[1-[2-[(2,4-Dichlorphenyl)-methoxy]-phenyl]-ethenyl]-1H-imidazol,
• 1-Methyl-5-nonyl-2-(phenylmethyl)-3-pyrrolidinol,
• 2',6'-Dibrom-2-methyl-4'-trifluormethoxy-4'-trifluor-methyl-1,3-thiazol-5-carboxanilid,
• 2,2-Dichlor-N-[1-(4-chlorphenyl)-ethyl]-1-ethyl-3-methyl-cyclopropancarboxamid,
• 2,6-Dichlor-5-(methylthio)-4-pyrimidinyl-thiocyanat,
• 2,6-Dichlor-N-(4-trifluormethylbenzyl)-benzamid,
• 2,6-Dichlor-N-[[4-(trifluormethyl)-phenyl]-methyl]-benzamid,
• 2-(2,3,3-Triiod-2-propenyl)-2H-tetrazol,
• 2-[(1-Methylethyl)-sulfonyl]-5-(trichlormethyl)-1,3,4-thiadiazol,
• 2-[[6-Deoxy-4-O-(4-O-methyt-β-D-glycopyranosyl)-a-D-glucopyranosyl]-amino]-4-methoxy-1H-pyrrolo[2,3-d]pyrimidin-5-carbonitril,
• 2-Aminobutan,
• 2-Brom-2-(brommethyl)-pentandinitril,
• 2-Chlor-N-(2,3-dihydro-1,1,3-trimethyl-1H-inden-4-yl)-3-pyridincarboxamid,
• 2-Chlor-N-(2,6-dimethylphenyl)-N-(isothiocyanatomethyl)-acetamid,
• 2-Phenylphenol(OPP),
• 3,4-Dichlor-1-[4-(difluoromethoxy)-phenyl]-1H-pyrrol**-**2,5-dion,
• 3,5-Dichlor-N-[cyan[(1-methyl-2-propynyl)-oxy]-methyl]-benzamid,
• 3-(1,1-Dimethylpropyl-1-oxo)-1H-inden-2-carbonitril,
• 3-[2-(4-Chlorphenyl)-5-ethoxy-3-isoxazolidinyl]-pyridin,
• 4-Chlor-2-cyan N,N-dimethyl-5-(4-methylphenyl)-1H-imidazol-1-sulfonamid,
• 4-Methyl-tetrazolo[1,5-a]quinazolin-5(4H)-on,
• 8-(1,1-Dimethylethyl)-N-ethyl-N-propyl-1,4-dioxaspiro[4.5]decan-2-methanamin,
• 8-Hydroxychinolinsulfat,
• 9H-Xanthen-9-carbonsäure-2-[(phenylamino)-carbonyl]-hydrazid,
• bis-(1-Methylethyl)-3-methyl-4-[(3-methylbenzoyl)-oxy]-2,5-thiophendicarboxylat
• cis-1-(4-Chlorphenyl)-2-(1H-1,2,4-triazol-1-yl)-cycloheptanol,
• cis-4-[3-[4-(1-,1-Dimethylpropyl)-phenyl-2-methylpropyl]-2,6-dimethyl-morpholin-hydrochlorid,
• Ethyl-[(4-chlorphenyl)-azo]-cyanoacetat,
• Methantetrathiol-Natriumsalz,
• Methyl-1-(2,3-dihydro-2,2-dimethyl-1H-inden-1-yl)-1H-imidazol-5-carboxylat,
• Methyl-N-(2,6-dimethylphenyl)-N-(5-isoxazolylcarbonyl)-DL-alaninat,
• Methyl-N-(chloracetyl)-N-(2,6-dimethylphenyl)-DL-alaninat,
• N-(2,3-Dichlor-4-hydroxyphenyl)-1-methyl-cyclohexancarboxamid.
• N-(2,6-Dimethylphenyl)-2-methoxy-N-(tetrahydro-2-oxo-3-furanyl)-acetamid,
• N-(2,6-Dimethylphenyl)-2-methoxy N-(tetrahydro-2-oxo-3-thienyl)-acetamid,
• N-(2-Chlor-4-nitrophenyl)-4-methyl-3-nitro-benzolsulfonamid,
• N-(4-Cyclohexylphenyl)-1,4,5,6-tetrahydro-2-pyrimidinamin,
• N-(4-Hexylphenyl)-1,4,5,6-tetrahydro-2-pyrimidinamin,
• N-(5-Chlor-2-methylphenyl)-2-methoxy-N-(2-oxo-3-oxazolidinyl)-acetamid,
• N-(6-Methoxy)-3-pyridinyl)-cyclopropancarboxamid,
• N-[2,2,2-Trichlor-1-[(chloracetyl)-amino]-ethyl]-benzamid,
• N-[3-Chlor-4,5-bis-(2-propinyloxy)-phenyl]-N'-methoxy-methanimidamid,
• N-Formyl-N-hydroxy-DL-alanin Natriumsalz,
• O,O-Diethyl-[2-(dipropylamino)-2-oxoethyl]-ethylphosphoramidothioat,
• O-Methyl-S-phenyl-phenylpropylphosphoramidothioate,
• S-Methyl-1,2,3-benzothiadiazol-7-carbothioat und
• spiro[2H]-1-Benzopyran-2,1'(3'H)-isobenzofuran]-3'-on.

4. Fungizides Mittel gemäß einem der Ansprüche 1 bis 3, **dadurch gekennzeichnet, dass** es ein weiteres Fungizid enthält, das ausgewählt ist aus der Gruppe Captan, Tebuconazol, Propiconazol, Cyproconazol, Cymoxanil und Pyrimethanil.

5. Fungizides Mittel gemäß Anspruch 1, **dadurch gekennzeichnet, dass** es kein weiteres Fungizid enthält.

6. Fungizides Mittel gemäß einem der Ansprüche 1 bis 5, **dadurch gekennzeichnet, dass** es einen Anteil von 0,5 bis 30 Gew.-% an Trifloxystrobin enthält.

7. Fungizides Mittel gemäß einem der Ansprüche 1 bis 6, **dadurch gekennzeichnet, dass** es Formiat in Form von Kalium-, Natrium- oder Calciumformiat oder Ameisensäure enthält.

8. Fungizides Mittel gemäß Anspruch 7, **dadurch gekennzeichnet, dass** es Calciumformiat enthält.

9. Fungizides Mittel gemäß einem der Ansprüche 1 bis 8, **dadurch gekennzeichnet, dass** das molare Verhältnis von Formiaten zu Trifloxystrobin zwischen 5:1 und 500:1 liegt.

10. Fungizides Mittel gemäß einem der Ansprüche 1 bis 9, **dadurch gekennzeichnet, dass** als Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen solche aus der Gruppe bestehend aus Ameisensäure, Essigsäure, Propionsäure, Milchsäure, Weinsäure, Äpfelsäure, Bernsteinsäure und Zitronensäure eingesetzt werden.

11. Fungizides Mittel gemäß einem der Ansprüche 1 bis 10, **dadurch gekennzeichnet, dass** das Gewichtsverhältnis von Trifloxystrobin, Formiat bezogen auf freie Ameisensäure und Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen 1:(10 bis 100):(5 bis 100) beträgt.

12. Wässriges Mittel, erhältlich durch Verdünnung von fungiziden Mitteln gemäß einem der Ansprüche 1 bis 11 mit Wasser.

13. Verfahren zur Bekämpfung von phytopathogenen Pilzen, **dadurch gekennzeichnet, dass** die Bekämpfung unter Einsatz von fungiziden Mitteln gemäß einem der Ansprüche 1 bis 11 oder wässrigen Mitteln gemäß Anspruch 12 erfolgt.

14. Verfahren zur Bekämpfung von phytopathogenen Pilzen, **dadurch gekennzeichnet, dass** Pflanzen und Pflanzenteile innerhalb von 72 Stunden oder die Umgebung, der Lebensraum oder Lagerraum von Pflanzen und Pflanzenteilen innerhalb von 120 Stunden mit den Komponenten I) bis III)
I) Trifloxystrobin
II) Formiat
III) zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist
behandelt werden.

15. Verwendung von fungiziden Mitteln gemäß einem der Ansprüche 1 bis 11 oder wässrigen Mitteln gemäß Anspruch 12 zur Bekämpfung von phytopathogenen Pilzen.

## Claims

1. Fungicidal composition, comprising
• trifloxystrobin
• formate
• at least one substance which, as a one-molar solution in water or calculated as a one-molar solution in water or an aqueous comparative scale, has a pH of 5.0 or less under standard conditions.

2. Fungicidal composition according to Claim 1, **characterized in that** it comprises at least one further fungicide.

3. Fungicidal composition according to Claim 2, **characterized in that** it comprises one or more of the following as further fungicides:
• aldimorph, ampropylfos, ampropylfos-potassium, andoprim, anilazin, azaconazole, azoxystrobin,
• benalaxyl, benodanil, benomyl, benzamacril, bezamacryl-isobutyl, bialaphos, binapacryl, biphenyl, bitertanol, blasticidin-S, bromuconazole, bupirimate, buthiobate,
• calcium polysulfide, capsimycin, captafol, captan, carbendazim, carboxin, carvon, quinomethionate, chlobenthiazone, chlorfenazole, chloroneb, chloropicrin, chlorothalonil, chlozolinate, clozylacon, cufraneb, cymoxanil, cyproconazole, cyprodinil, cyprofuram,
• debacarb, dichlorophen, diclobutrazol, diclofluanid, diclomezin, dicloran, diethofencarb, difenoconazole, dimethirimol, dimethomorph, diniconazole, diniconazole-M, dinocap, diphenylamine, dipyrithione, ditalimfos, dithianon, dodemorph, dodine, drazoxolon,
• ediphenphos, epoxiconazole, etaconazole, ethirimol, etridiazole,
• famoxadon, fenapanil, fenarimol, fenbuconazole, fenfuram, fenitropan, fenpiclonil, fenpropidin, fenpropimorph, fentin acetate, fentin hydroxide, ferbam, ferimzone, fluazinam, flumetover, fluoromid, fluquinconazole, flurprimidol, flusilazole, flusulfamide, flutolanil, flutriafol, folpet, fosetyl-aluminum, fosetyl-sodium, fthalide, fuberidazole, furalaxyl, furametpyr, furcarbonil, furconazole, furconazole-cis, furmecyclox,
• guazatine,
• hexachlorobenzene, hexaconazole, hymexazol,
• imazalil, imibenconazole, iminoctadine, iminoctadine albesilate, iminoctadine triacetate, iodocarb, ipconazole, iprobenfos (IBP), iprodione, irumamycin, isoprothiolane, isovaledione,
• kasugamycin, kresoxim-methyl, copper preparations such as: copper hydroxide, copper naphthenate, copper octanoate, copper oxychloride, copper sulfate, copper oxide, oxine-copper and Bordeaux mixture,
• mancopper, mancozeb, maneb, meferimzone, mepanipyrim, mepronil, metalaxyl, metconazole, methasulfocarb, methfuroxam, metiram, metomeclam, metsulfovax, mildiomycin, myclobutanil, myclozolin,
• nickel dimethyldithiocarbamate, nitrothal-isopropyl, nuarimol,
• ofurace, oxadixyl, oxamocarb, oxolinic acid, oxycarboxim, oxyfenthiin,
• paclobutrazole, pefurazoate, penconazole, pencycuron, phosdiphen, pimaricin, piperalin, polyoxin, polyoxorim, probenazole, prochloraz, procymidone, propamocarb, propanosine-sodium, propiconazole, propineb, pyrazophos, pyrifenox, pyrimethanil, pyroquilon, pyroxyfur,
• quinconazole, quintozen (PCNB),
• sulfur and sulfur preparations,
• tebuconazole, tecloftalam, tecnazen, tetcyclacis, tetraconazole, thiabendazole, thicyofen, thifluzamide, thiophanate-methyl, thiram, tioxymid, tolclofos-methyl, tolylfluanid, triadimefon, triadimenol, triazbutil, triazoxide, trichlamide, tricyclazole, tridemorph, triflumizole, triforine, triticonazole,
• uniconazole,
• validamycin A, vinclozolin, viniconazole,
• zarilamid, zineb, ziram and
• Dagger G,
• OK-8705,
• OK-8801,
• α-(1,1-dimethylethyl)-β-(2-phenoxyethyl)-1H-1,2,4-triazole-1-ethanol,
• α-(2,4-dichlorophenyl)-β-fluoro-b-propyl-1H-1,2,4-triazole-1-ethanol,
• α-(2,4-dichlorophenyl)-β-methoxy-a-methyl-1H-1,2,4-triazole-1-ethanol,
• α-(5-methyl-1,3-dioxan-5-yl)-β-[[4-(trifluoromethyl)phenyl]-methylene]-1H-1,2,4-triazole-1-ethanol,
• (5RS,6RS)-6-hydroxy-2,2,7,7-tetramethyl-5-(1H-1,2,4-triazol-1-yl)-3-octanone,
• (E)-a-(methoxyimino)-N-methyl-2-phenoxyphenylacetamide,
• 1-isopropyl {2-methyl-1-[[[1-(4-methylphenyl)ethyl]amino]-carbonyl]propyl}carbamate
• 1-(2,4-dichlorophenyl)-2-(1H-1,2,4-triazol-1-yl)ethanone-O-(phenylmethyl)oxime,
• 1-(2-methyl-1-naphthalenyl)-1H-pyrrole-2,5-dione,
• 1-(3,5-dichlorophenyl)-3-(2-propenyl)-2,5-pyrrolidinedione,
• 1-[(diiodomethyl)sulfonyl]-4-methylbenzene,
• 1-[[2-(2,4-dichlorophenyl)-1,3-dioxolan-2-yl]methyl]-1H-imidazole,
• 1-[[2-(4-chlorophenyl)-3-phenyloxiranyl]methyl]-1H-1,2,4-triazole,
• 1-[1-[2-[(2,4-dichlorophenyl)methoxy]phenyl]ethenyl]-1H-imidazole,
• 1-methyl-5-nonyl-2-(phenylmethyl)-3-pyrrolidinol,
• 2',6'-dibromo-2-methyl-4'-trifluoromethoxy-4'-trifluoromethyl-1,3-thiazole-5-carboxanilide,
• 2,2-dichloro-N-[1-(4-chlorophenyl)ethyl]-1-ethyl-3-methylcyclopropanecarboxamide,
• 2,6-dichloro-5-(methylthio)-4-pyrimidinylthiocyanate,
• 2,6-dichloro-N-(4-trifluoromethylbenzyl)benzamide,
• 2,6-dichloro-N-[[4-(trifluoromethyl)phenyl]methyl]benzamide,
• 2-(2,3,3-triiodo-2-propenyl)-2H-tetrazole,
• 2-[(1-methylethyl)sulfonyl]-5-(trichloromethyl)-1,3,4-thiadiazole,
• 2-[[6-deoxy-4-O-(4-O-methyl-β-D-glycopyranosyl)-a-D-glucopyranosyl]amino]-4-methoxy-1H-pyrrolo[2,3-d]pyrimidine-5-carbonitrile,
• 2-aminobutane,
• 2-bromo-2-(bromomethyl)pentanonitrile,
• 2-chloro-N-(2,3-dihydro-1,1,3-trimethyl-1H-inden-4-yl)-3-pyridinecarboxamide,
• 2-chloro-N-(2,6-dimethylphenyl)-N-(isothiocyanatomethyl)-acetamide,
• 2-phenylphenol(OPP),
• 3,4-dichloro-1-[4-(difluoromethoxy)phenyl]-1H-pyrrole-2,5-dione,
• 3,5-dichloro-N-[cyano[(1-methyl-2-propynyl)oxy]methyl]benzamide,
• 3-(1,1-dimethylpropyl-1-oxo)-1H-indene-2-carbonitrile,
• 3-[2-(4-chlorophenyl)-5-ethoxy-3-isoxazolidinyl]pyridine,
• 4-chloro-2-cyano-N,N-dimethyl-5-(4-methylphenyl)-1H-imidazole-1-sulfonamide,
• 4-methyltetrazolo[1,5-a]quinazolin-5(4H)-one,
• 8-(1,1-dimethylethyl)-N-ethyl-N-propyl-1,4-dioxaspiro[4.5]decane-2-methanamine,
• 8-hydroxyquinoline sulfate,
• 9H-xanthene-9-carboxylic 2-[(phenylamino)carbonyl]hydrazide,
• bis(1-methylethyl)-3-methyl-4-[(3-methylbenzoyl)oxy]-2,5-thiophene dicarboxylate
• cis-1-(4-chlorophenyl)-2-(1H-1,2,4-triazol-1-yl)cycloheptanol,
• cis-4-[3-[4-(1,1-dimethylpropyl)phenyl-2-methylpropyl]-2,6-dimethylmorpholine hydrochloride,
• ethyl [(4-chlorophenyl)azo]cyanoacetate,
• methanetetrathiol sodium salt,
• methyl 1-(2,3-dihydro-2,2-dimethyl-1H-inden-1-yl)-1H-imidazole-5-carboxylate,
• methyl N-(2,6-dimethylphenyl)-N-(5-isoxazolylcarbonyl)-DL-alaninate,
• methyl N-(chloroacetyl)-N-(2,6-dimethylphenyl)-DL-alaninate,
• N-(2,3-dichloro-4-hydroxyphenyl)-1-methylcyclohexanecarboxamide,
• N-(2,6-dimethylphenyl)-2-methoxy-N-(tetrahydro-2-oxo-3-furanyl)acetamide,
• N-(2,6-dimethylphenyl)-2-methoxy-N-(tetrahydro-2-oxo-3-thienyl)acetamide,
• N-(2-chloro-4-nitrophenyl)-4-methyl-3-nitrobenzenesulfonamide,
• N-(4-cyclohexylphenyl)-1,4,5,6-tetrahydro-2-pyrimidinamine,
• N-(4-hexylphenyl)-1,4,5,6-tetrahydro-2-pyrimidinamine,
• N-(5-chloro-2-methylphenyl)-2-methoxy-N-(2-oxo-3-oxazolidinyl)acetamide,
• N-(6-methoxy)-3-pyridinyl)cyclopropanecarboxamide,
• N-[2,2,2-trichloro-1-[(chloroacetyl)amino]ethyl]benzamide,
• N-[3-chloro-4,5-bis(2-propinyloxy)phenyl]-N'-methoxymethaneimidamide,
• N-formyl-N-hydroxy-DL-alanine sodium salt,
• O,O-diethyl [2-(dipropylamino)-2-oxoethyl]ethylphosphoramidothioate,
• O-methyl S-phenyl phenylpropylphosphoramidothioate,
• S-methyl-1,2,3-benzothiadiazole-7-carbothioate and
• spiro[2H]-1-benzopyran-2,1'(3'H)-isobenzofuran]-3'-one.

4. Fungicidal composition according to any of Claims 1 to 3, **characterized in that** it comprises a further fungicide selected from the group captan, tebuconazole, propiconazole, cyproconazole, cymoxanil and pyrimethanil.

5. Fungicidal composition according to Claim 1, **characterized in that** it comprises no further fungicide.

6. Fungicidal composition according to any of Claims 1 to 5, **characterized in that** it comprises an amount of from 0.5 to 30% by weight of trifloxystrobin.

7. Fungicidal composition according to any of Claims 1 to 6, **characterized in that** it comprises formate in the form of potassium formate, sodium formate or calcium formate, or formic acid.

8. Fungicidal composition according to Claim 7, **characterized in that** it comprises calcium formate.

9. Fungicidal composition according to any of Claims 1 to 8, **characterized in that** the molar ratio of formates to trifloxystrobin is between 5:1 and 500:1.

10. Fungicidal composition according to any of Claims 1 to 9, **characterized in that** the substances which are employed as a one-molar solution in water or calculated as a one-molar solution in water or an aqueous comparative scale have a pH of 5.0 or less under standard conditions are those from the group consisting of formic acid, acetic acid, propionic acid, lactic acid, tartaric acid, mallic acid, succinic acid and citric acid.

11. Fungicidal composition according to any of Claims 1 to 10, **characterized in that** the weight ratio of trifloxystrobin, formate based on free formic acid and substances which are employed as a one-molar solution in water or calculated as a one-molar solution in water or an aqueous comparative scale have a pH of 5.0 or less under standard conditions is from 1:(10 to 100):(5 to 100).

12. Aqueous composition, obtainable by diluting fungicidal compositions according to any of Claims 1 to 11 with water.

13. Method of controlling phytopathogenic fungi, **characterized in that** the control is carried out using fungicidal compositions according to any of Claims 1 to 11 or aqueous compositions according to Claim 12.

14. Method of controlling phytopathogenic fungi, **characterized in that** plants and plant parts are treated within 72 hours or the environment, the habitat or store of plants and plant parts is treated within 120 hours with the components I) to III)
I) trifloxystrobin
II) formate
III) at least one substance which, as a one-molar solution in water or calculated as a one-molar solution in water or an aqueous comparative scale, has a pH of 5.0 or less under standard conditions.

15. Use of fungicidal compositions according to any of Claims 1 to 11 or aqueous compositions according to Claim 12 for controlling phytopathogenic fungi.

## Revendications

1. Agent fongicide contenant
- de la trifloxystrobine
- du formiate
- au moins une substance qui, en tant que solution à un molaire dans l'eau ou calculée par rapport à une solution à un molaire dans l'eau ou à une échelle comparative aqueuse, présente un pH de 5,0 ou moins dans les conditions standard.

2. Agent fongicide selon la revendication 1, **caractérisé en ce qu'**il contient au moins un autre fongicide.

3. Agent fongicide selon la revendication 2, **caractérisé en ce qu'**il contient, comme autre fongicide, un ou plusieurs des composés suivants :
- aldimorphe, ampropylfos, ampropylfos sel de potassium, andoprim, anilazine, azaconazole, azoxystrobine,
- bénalaxyle, bénodanil, bénomyle, benzamacril, benzamacryl-isobutyl, bialaphos, binapacryle, biphényle, bitertanol, blasticidine-S, bromuconazole, bupirimate, buthiobate,
- polysulfure de calcium, capsimycine, captafol, captane, carbendazime, carboxine, carvone, chinométhionate (quinométhionate), chlobenthiazone, chlorfénazole, chloroneb, chloropicrine, chlorothalonil, chlozolinate, clozylacon, cufraneb, cymoxanil, cyproconazole, cyprodinil, cyprofuram,
- débacarbe, dichlorophène, diclobutrazole, diclofluanide, diclomézine, dicloran, diéthofencarbe, difénoconazole, diméthirimol, diméthomorphe, diniconazole, diniconazole-M, dinocap, diphénylamine, dipyrithione, ditalimfos, dithianon, dodémorphe, dodine, drazoxolon,
- édifenphos, époxiconazole, étaconazole, éthirimol, étridiazole,
- famoxadone, fénapanil, fénarimol, fenbuconazole, fenfuram, fénitropan, fenpiclonil, fenpropidine, fenpropimorphe, acétate de fentine, hydroxyde de fentine, ferbam, férimzone, fluazinam, flumetover, fluoromide, fluquinconazole, flurprimidol, flusilazole, flusulfamide, flutolanil, flutriafol, folpet, fosétyl aluminium, fosétyl sodium, phtalide, fubéridazole, furalaxyl, furametpyr, furcarbonil, furconazole, furconazole-cis, furmécyclox,
- guazatine,
- hexachlorobenzène, hexaconazole, hymexazol,
- imazalil, imibenconazole, iminoctadine, albésilate d'iminoctadine, triacétate d'iminoctadine, iodocarb, ipconazole, iprobenfos (IBP), iprodione, irumamycine, isoprothiolane, isovaledione,
- kasugamycine, krésoxim-méthyl, préparations de cuivre, telles que : hydroxyde de cuivre, naphténate de cuivre, octanoate de cuivre, oxychlorure de cuivre, sulfate de cuivre, oxyde de cuivre, oxine-cuivre et bouillie bordelaise,
- mancopper, mancozeb, maneb, méférimzone, mépanipyrim, mépronil, métalaxyle, metconazole, méthasulfocarbe, méthfuroxam, métiram, métoméclam, metsulfovax, mildiomycine, myclobutanil, myclozoline,
- diméthyldithiocarbamate de nickel, nitrothal-isopropyl, nuarimol,
- ofurace, oxadixyle, oxamocarbe, acide oxolinique, oxycarboxim, oxyfenthiine,
- paclobutrazole, pefurazoate, penconazole, pencycuron, phosdiphène, pimaricine, pipéraline, polyoxine, polyoxorim, probenazole, prochloraze, procymidone, propamocarbe, propanosine-sodium, propiconazole, propineb, pyrazophos, pyrifénox, pyriméthanil, pyroquilone, pyroxyfur,
- quinconazole, quintozène (PCNB),
- soufre et préparations à base de soufre,
- tébuconazole, tecloftalam, tecnazène, tetcyclacis, tétraconazole, thiabendazole, thicyofène, thifluzamide, thiophanate-méthyl, thiram, tioxymid, tolclofos-méthyl, toluylfluanide, triadiméfon, triadiménol, triazbutil, triazoxide, trichlamide, tricyclazole, tridémorph, triflumizole, triforine, triticonazole,
- uniconazole,
- validamycine A, vinclozoline, viniconazole,
- zarilamid, zineb, ziram ainsi que
- Dagger G,
- OK-8705,
- OK-8801,
- α-(1,1-diméthyléthyl)-β-(2-phénoxyéthyl)-1H-1,2,4-triazol-1-éthanol,
- α-(2,4-dichlorophényl)-β-fluoro-b-propyl-1H-1,2,4-triazol-1-éthanol,
- α-(2,4-dichlorophényl)-β-méthoxy-α-méthyl-1H-1,2,4-triazol-1-éthanol,
- α-(5-méthyl-1,3-dioxan-5-yl)-β-[[4-(trifluorométhyl)-phényl]-méthylène]-1H-1,2,4-triazol-1-éthanol,
- (5RS,6RS)-6-hydroxy-2,2,7,7-tétraméthyl-5-(1H-1,2,4-triazol-1-yl)-3-octanone,
- (E)-a-(méthoxyimino)-N-méthyl-2-phénoxyphénylacétamide,
- ester 1-isopropylique de l'acide {2-méthyl-1-[[[1-(4-méthylphényl)-éthyl]-amino]-carbonyl]-propyl}-carbamique
- 1-(2,4-dichlorophényl)-2-(1H-1,2,4-triazol-1-yl)-éthanone-O-(phénylméthyl)-oxime,
- 1-(2-méthyl-1-naphtalényl)-1H-pyrrole-2,5-dione,
- 1-(3,5-dichlorophényl)3-(2-propényl)-2,5-pyrrolidinedione,
- 1-[(diiodométhyl)-sulfonyl]-4-méthylbenzène,
- 1-[[2-(2,4-dichlorophényl)-1,3-dioxolan-2-yl]-méthyl]-1H-imidazole,
- 1-[[2-(4-chlorophényl)-3-phényloxiranyl]-méthyl]-1H-1,2,4-triazole,
- 1-[1-[2-[(2,4-dichlorophényl)-méthoxy]-phényl]-éthényl]-1H-imidazole,
- 1-méthyl-5-nonyl-2-(phénylméthyl)-3-pyrrolidinol,
- 2',6'-dibromo-2-méthyl-4'-trifluorométhoxy-4'-trifluorométhyl-1,3-thiazole-5-carboxanilide,
- 2,2-dichloro-N-[1-[4-chlorophényl)-éthyl]-1-éthyl-3-méthylcyclopropanecarboxamide,
- thiocyanate de 2,6-dichloro-5-(méthylthio)-4-pyrimidinyle,
- 2,6-dichloro-N-(4-trifluorométhylbenzyl)-benzamide,
- 2,6-dichloro-N-[[4-(trifluorométhyl)-phényl]-méthyl]-benzamide,
- 2-(2,3,3-triiodo-2-propényl)-2H-tétrazole,
- 2-[(1-méthyléthyl)-sulfonyl]-5-(trichlorométhyl)-1,3,4-thiadiazole,
- 2-[[6-désoxy-4-O-(4-O-méthyl-β-D-glycopyranosyl)-a-D-glucopyranosyl]-amino]-4-méthoxy-1H-pyrrolo[2,3-d]pyrimidine-5-carbonitrile,
- 2-aminobutane,
- 2-bromo-2-(bromométhyl)-pentanedinitrile,
- 2-chloro-N-(2,3-dihydro-1,1,3-triméthyl-1H-indén-4-yl)-3-pyridinecarboxamide,
- 2-chloro-N-(2,6-diméthylphényl)-N-(isothiocyanatométhyl)-acétamide,
- 2-phénylphénol (OPP),
- 3,4-dichloro-1-[4-(difluorométhoxy)-phényl]-1H-pyrrole-2,5-dione,
- 3,5-dichloro-N-[cyano[(1-méthyl-2-propynyl)-oxy]-méthyl]-benzamide,
- 3-(1,1-diméthylpropyl-1-oxo)-1H-indène-2-carbonitrile,
- 3-[2-(4-chlorophényl)-5-éthoxy-3-isoxazolidinyl]-pyridine,
- 4-chloro-2-cyano-N,N-diméthyl-5-(4-méthylphényl)-1H-imidazole-1-sulfonamide,
- 4-méthyltétrazolo[1,5-a]quinazoléin-5(4H)-one,
- 8-(1,1-diméthyléthyl)-N-éthyl-N-propyl-1,4-dioxaspiro[4,5]décane-2-méthanamine,
- sulfate de 8-hydroxyquinoléine,
- 2-[(phénylamino)-carbonyl]-hydrazide de l'acide 9H-xanthène-9-carboxylique,
- dicarboxylate de bis-(1-méthyléthyl)-3-méthyl-4-[(3-méthylbenzoyl)-oxy]-2,5-thiophène
- cis-1-(4-chlorophényl)-2-(1H-1,2,4-triazol-1-yl)-cycloheptanol,
- chlorhydrate de cis-4-[3-[4-(1,1-diméthylpropyl)-phényl-2-méthylpropyl]-2,6-diméthylmorpholine,
- [(4-chlorophényl)-azo]-cyanoacétate d'éthyle,
- sel sodique de méthanetétrathiol,
- 1-(2,3-dihydro-2,2-diméthyl-1H-inden-1-yl)-1H-imidazole-5-carboxylate de méthyle,
- N-(2,6-diméthylphényl)-N-(5-isoxazolylcarbonyl)-DL-alaninate de méthyle,
- N-(chloroacétyl)-N-(2,6-diméthylphényl)-DL-alaninate de méthyle,
- N-(2,3-dichloro-4-hydroxyphényl)-1-méthylcyclohexanecarboxamide,
- N-(2,6-diméthylphényl)-2-méthoxy-N-(tétrahydro-2-oxo-3-furannyl)-acétamide,
- N-(2,6-diméthylphényl)-2-méthoxy-N-(tétrahydro-2-oxo-3-thiényl)-acétamide,
- N-(2-chloro-4-nitrophényl)-4-méthyl-3-nitrobenzènesulfonamide,
- N-(4-cyclohexylphényl)-1,4,5,6-tétrahydro-2-pyrimidinamine,
- N-(4-hexylphényl)-1,4,5,6-tétrahydro-2-pyrimidinamine,
- N-(5-chloro-2-méthylphényl)-2-méthoxy-N-(2-oxo-3-oxazolidinyl)-acétamide,
- N-(6-méthoxy)-3-pyridinyl)-cyclopropancarboxamide,
- N[2,2,2-trichloro-1-[(chloroacétyl)-amino]-éthyl]-benzamide,
- N-[3-chloro-4,5-bis-(2-propynyloxy)-phényl]-N'-méthoxyméthanimidamide,
- sel sodique de la N-formyl-N-hydroxy-DL-alanine,
- phosphoramidothioate d'O,O-diéthyl-[2-(dipropylamino)-2-oxoéthyl]-éthyle,
- phosphoramidothioate d'O-méthyl-S-phénylphénylpropyle,
- S-méthyl-1,2,3-benzothiadiazole-7-carbothioate et
- spiro[2H]-1-benzopyran-2,1'(3'H)-isobenzofuran]-3'-one.

4. Agent fongicide selon l'une quelconque des revendications 1 à 3, **caractérisé en ce qu'**il contient un autre fongicide, choisi dans le groupe formé par captane, tébuconazole, propiconazole, cyproconazole, cymoxanil et pyriméthanil.

5. Agent fongicide selon la revendication 1, **caractérisé en ce qu'**il ne contient pas d'autre fongicide.

6. Agent fongicide selon l'une quelconque des revendications 1 à 5, **caractérisé en ce qu'**il contient une proportion en trifloxystrobine de 0,5 à 30% en poids.

7. Agent fongicide selon l'une quelconque des revendications 1 à 6, **caractérisé en ce qu'**il contient le formiate sous forme de formiate de potassium, de sodium ou de calcium ou d'acide formique.

8. Agent fongicide selon la revendication 7, **caractérisé en ce qu'**il contient du formiate de calcium.

9. Agent fongicide selon l'une quelconque des revendications 1 à 8, **caractérisé en ce que** le rapport molaire de formiates à trifloxystrobine est situé entre 5:1 et 500:1.

10. Agent fongicide selon l'une quelconque des revendications 1 à 9, **caractérisé en ce qu'**on utilise comme substances qui, en tant que solution à un molaire dans l'eau ou calculées par rapport à une solution à un molaire dans l'eau ou à une échelle comparative aqueuse, présentent un pH de 5,0 ou moins dans les conditions standard, des substances du groupe constitué par l'acide formique, l'acide acétique, l'acide propionique, l'acide lactique, l'acide tartrique, l'acide malique, l'acide succinique et l'acide citrique.

11. Agent fongicide selon l'une quelconque des revendications 1 à 10, **caractérisé en ce que** le rapport pondéral de la trifloxystrobine, du formiate, par rapport à l'acide formique libre, et de substances qui, en tant que solution à un molaire dans l'eau ou calculée par rapport à une solution à un molaire dans l'eau ou à une échelle comparative aqueuse, présentent un pH de 5,0 ou moins dans les conditions standard est de 1: 10 à 100) : (5 à 100).

12. Agent aqueux, pouvant être obtenu par dilution d'agents fongicides selon l'une quelconque des revendications 1 à 11 par de l'eau.

13. Procédé pour lutter contre des champignons phytopathogènes, **caractérisé en ce que** la lutte s'effectue avec utilisation d'agents fongicides selon l'une quelconque des revendications 1 à 11 ou d'agents aqueux selon la revendication 12.

14. Procédé pour lutter contre des champignons phytopathogènes, **caractérisé en ce que** les végétaux et les parties de végétaux sont traités en 72 heures ou l'environnement, l'espace de vie et l'espace d'entreposage de plantes et de parties de plantes sont traités en 120 heures par les composants I) à III)
I) trifloxystrobine
II) formiate
III) au moins une substance qui, en tant que solution à un molaire dans l'eau ou calculée par rapport à une solution à un molaire dans l'eau ou à une échelle comparative aqueuse, présente un pH de 5,0 ou moins dans les conditions standard.

15. Utilisation d'agents fongicides selon l'une quelconque des revendications 1 à 11 ou d'agents aqueux selon la revendication 12 pour lutter contre des champignons phytopathogènes.
